# EUROPEAN PATENT SPECIFICATION

(11) **EP 3 059 444 B1**
(45) Date of publication and mention of the grant of the patent: **11.10.2017**
(21) Application number: 15179330.4
(22) Date of filing: 31.07.2015
(51) Int. Cl.: F03D 7/04

(54) **METHOD AND APPARATUS FOR CONTROLLING WIND TURBINE GENERATOR AND WIND TURBINE GENERATOR**
VERFAHREN UND VORRICHTUNG ZUR STEUERUNG EINES WINDTURBINENGENERATORS UND WINDTURBINENGENERATOR
PROCÉDÉ ET APPAREIL DE COMMANDE DE GÉNÉRATEUR DE TURBINE ÉOLIENNE ET AÉROGÉNÉRATEUR

(30) Priority: 19.02.2015 JP 2015030232
(43) Date of publication of application: 24.08.2016
(73) Proprietor: MITSUBISHI HEAVY INDUSTRIES, LTD., Tokyo 108-8215 (JP)
(72) Inventor: IWASAKI, Satoshi, MINATO-KU, TOKYO, 108-8215 (JP); KOYANAGI, Takuya, MINATO-KU, TOKYO, 108-8215 (JP); ICHINOSE, Hidekazu, MINATO-KU, TOKYO, 108-8215 (JP); EGASHIRA, Yusaku, MINATO-KU, TOKYO, 108-8215 (JP)
(74) Representative: Intès, Didier Gérard André

(56) References cited:
- EP-A1- 1 832 743
- EP-A1- 1 990 539
- EP-A1- 2 492 499
- EP-A1- 2 784 303
- US-A1- 2012 056 427
- US-A1- 2012 211 982

## Description

### TECHNICAL FIELD

The present disclosure relates to a method and an apparatus for controlling a wind turbine generator, and to a wind turbine generator.

### BACKGROUND

A wind turbine generator includes a rotor including blades and a rotation shaft which rotates with the blade. It is required to control the rotation speed of the rotor appropriately for stable operation of the wind turbine generator. For instance, Patent Document 1 describes a method of controlling the rotation speed of the rotor through pitch angles of the blades or the torque.

Normally, in a common control of the rotation speed of the rotor, the torque of the rotor is adjusted until the output of a wind turbine generator reaches a rated output, and the pitch angles of the blades are adjusted once the output of the wind turbine generator has reached the rated output. In this case, the pitch angle of each blade is fixed at the maximum (full-fine pitch angle) when the torque of the rotor is controlled, and the torque of the rotor is fixed at the maximum when the pitch angles of the blades are controlled.

US2012211982 (A1) discloses a controller for a wind turbine generator, a wind turbine generator, and a method of controlling a wind turbine generator.

### Citation List

### Patent Literature

Patent Document 1: US 2008/0136188A

### SUMMARY

However, when the rotation speed of the rotor is controlled as described above, the control may be switched too often due to changes in the wind velocity.

In an ideal operation, for instance, the control of the rotation speed of the rotor is switched from the control through the torque to the control through the pitch angles when a torque command reaches the maximum, and is switched from the control through the pitch angles to the control through the torque when the pitch angles reach the maximum pitch angle.

However, when the control of the rotation speed of the rotor is switched from the control through the torque to the control through the pitch angles, there is a possibility that the rotation of the rotor becomes excessive, and thus the switch is usually performed before the torque reaches the maximum torque in many cases. That is, the control of the rotation speed of the rotor is switched to the control through pitch angles when the torque command value exceeds a torque threshold value which is set at a value smaller than the maximum torque. However, if the wind is not strong enough, the pitch-angle command value would not become small even after the control of the rotation speed of the rotor is switched to the control through pitch angles from the control through torque, and the wind turbine generator may operate with the pitch angles being close to the maximum. At this time, if the torque command value is increased from the torque threshold value to the maximum torque, the rotation speed of the rotor would decrease and the pitch-angle command value would be increased so as to prevent this decrease in the rotation speed. However, depending on the wind velocity, it may be impossible to prevent the decrease in the rotation speed of the rotor even with the maximum pitch angle. In this case, a phenomenon may occur, in which the control of the rotation speed of the rotor returns to the control through the torque immediately after being switched to the control through the pitch angles. Similarly, also when the rotation speed of the rotor is controlled through the pitch angles, the torque command value may reach the maximum and cause the rotation speed of the rotor to become excessive when the pitch angles increase to the maximum from a pitch-angle setting value for switching that is set at a value smaller than the maximum pitch angle, thereby causing a phenomenon in which the control of the rotation speed of the rotor returns to the control through the pitch angles.

In this regard, Patent Document 1 discloses no specific measure for addressing the too frequent switch of the control due to changes in the wind velocity.

In view of the above issues, an object of at least one embodiment of the present invention is to provide a method and an apparatus for controlling a wind turbine generator, and a wind turbine generator, whereby it is possible to prevent too frequent switch of the control due to changes in wind velocity.

The invention relates to a method of controlling a wind turbine generator according to claim 1 and a control unit of a wind turbine generator according to claim 4.
(1) A method of controlling a wind turbine generator according to at least one embodiment of the present disclosure is for a wind turbine generator which includes a rotor having at least one blade. The method includes a control-mode switch step of switching a control mode of the wind turbine generator between a first control mode in which a torque of the rotor is controlled to control a rotation speed of the rotor to be a predetermined rotation speed, and a second control mode in which a pitch angle of the blade is controlled to maintain the rotation speed of the rotor at a constant speed.

The control-mode switch step includes, if a first condition including a condition that a torque command value of the rotor is greater than a first torque threshold value is satisfied, switching the control mode from the first control mode to the second control mode, maintaining the torque command value of the time when the control mode is switched until a pitch-angle command value of the blade becomes smaller than a second pitch-angle threshold value, and increasing the torque command value to a maximum value and fixing the torque command value at the maximum value when the pitch-angle command value has become smaller than the second pitch-angle threshold value. Further, the control-mode switch step includes, if a second condition including a condition that the pitch-angle command value of the blade is greater than the first pitch-angle threshold value is satisfied, switching the control mode from the second control mode to the first control mode, maintaining the pitch-angle command value of the time when the control mode is switched until the torque command value becomes smaller than the second torque threshold value, and increasing the pitch-angle command value to a maximum value and fixing the pitch-angle command value at the maximum value when the torque command value has become smaller than the second torque threshold value.

According to the method of controlling a wind turbine generator described in the above (1), it is possible to prevent too frequent switch of the control due to changes in the wind velocity and to operate the wind turbine generator stably.

Specifically, in the above method of controlling a wind turbine generator, the control mode is switched from the first control mode to the second control mode if the first condition is satisfied. The first condition includes a condition that the torque command value of the rotor is greater than the first torque threshold value. At this time, the torque command value at the time of switching the control mode is maintained during a period until the pitch-angle command value of the blade becomes smaller than the second pitch-angle threshold value. In this period, the torque does not increase, so it is possible to maintain the rotation speed of the rotor without causing a considerable increase in the pitch angle even if the wind velocity is not so high. As a result, it is possible to avoid an event in which the pitch angle exceeds the first pitch-angle threshold value to cause the control mode to return to the first control mode immediately after the switch from the first control mode to the second control mode.

Further, the torque command value is increased to the maximum value and fixed at the maximum value when the pitch-angle command value has become smaller than the second pitch-angle threshold value. The second pitch-angle threshold value is set at a value smaller than the first pitch-angle threshold value used in the switch from the second control mode to the first control mode. Thus, there is an adequate gap between the second pitch-angle threshold value and the first pitch-angle threshold value when the pitch-angle command value has become smaller than the second pitch-angle threshold value. Thus, it is possible to maintain a state where the pitch angle is lower than the first pitch-angle threshold value even if the wind velocity varies to a certain extent. In this way, stable operation under the second control mode is enabled.

Further, the control mode is switched from the second control mode to the first control mode if the second condition is satisfied. The second condition includes a condition that the pitch angle command value of the blade is greater than the first pitch angle threshold value. At this time, in a period until the torque command value becomes smaller than the second torque threshold value, the pitch angle command value is maintained at the pitch angle command value of the time when the control mode is switched. In this period, the pitch angle does not increase so it is possible to maintain the rotation speed of the rotor without causing a considerable increase in the torque even if the wind velocity does not become so low. In this way, it is possible to avoid an event in which the torque exceeds the first torque threshold value to return to the second control mode immediately after the switch from the second control mode to the first control mode.

Further, the pitch-angle command value is increased to the maximum value and fixed at the maximum value when the torque command value has become smaller than the second torque threshold value. Since the second torque command value is set at a value smaller than the first torque value used in the switch from the first control mode to the second control mode, there is an adequate gap between the second torque threshold value and the first torque threshold value when the torque command value has become smaller than the second torque threshold value. Thus, it is possible to maintain a state where the torque is lower than the first torque threshold value even if the wind velocity varies to a certain extent. In this way, stable operation under the first control mode is enabled.

In the present specification, the blades have a larger pitch angle in a fine state than in a feather state. For instance, the pitch angle is 100% at a full-fine pitch angle and 0% at a full-feather pitch angle.
(2) In some embodiments, in the above method (1), in the control-mode switch step, the control mode is switched from the first control mode to the second control mode when the pitch-angle command value is fixed at the maximum value and the torque command value is greater than the first torque threshold value in the first control mode, and the control mode is switched from the second control mode to the first control mode when the torque command value is fixed at the maximum value and the pitch-angle command value is greater than the first pitch-angle threshold value in the second control mode.

According to the above method (2), the control mode is switched from the first control mode to the second control mode when the pitch-angle command value is fixed at the maximum value and the torque command value is greater than the first torque threshold value in the first control mode. When the pitch-angle command value is fixed at the maximum value in the first control mode, it means that the wind velocity has become low enough and the torque-command value has become lower than the second torque threshold value after the switch from the second control mode to the first control mode. As described above, it is possible to efficiently avoid an event where the control mode returns to the second control mode immediately after being switched from the second control mode to the first control mode, by adding the condition that the pitch-angle command value is fixed at the maximum value in the first control mode, as compared to a case where the control mode is switched from the first control mode to the second control mode if merely a condition that the torque command value is greater than the first torque threshold value is satisfied.

Further, the control mode is switched from the second control mode to the first control mode when the torque command value is fixed at the maximum value and the pitch-angle command value is larger than the first pitch-angle threshold value in the second control mode. When the torque command value is fixed at the maximum value in the second control mode, it means that the wind velocity has increased high enough and the pitch-angle command value has become lower than the second pitch-angle threshold value after the switch from the first control mode to the second control mode. As described above, it is possible to efficiently avoid an event where the control mode returns to the first control mode immediately after being switched from the first control mode to the second control mode, by adding the condition that the torque command value is fixed at the maximum value in the second control mode, as compared to a case where the control mode is switched from the second control mode to the first control mode if merely a condition that the pitch-angle command value is greater than the first pitch-angle threshold value is satisfied.
(3) In some embodiments, in the above method (1) or (2), in the control-mode switch step, the control mode is switched from the first control mode to the second control mode regardless of a magnitude of the torque command value when the rotation speed of the rotor has become not less than an upper limit value which is greater than a rated rotation speed, and the control mode is switched from the second control mode to the first control mode regardless of a magnitude of the pitch-angle command value, when the rotation speed of the rotor has become not greater than a lower limit value which is smaller than the rated rotation speed.

According to the above method (3), the control mode is switched from the first control mode to the second control mode regardless of the magnitude of the torque command value, when the rotation speed of the rotor has become not less than an upper limit value which is larger than the rated rotation speed. In this way, it is possible to prevent excessive rotation of the rotor upon a rapid increase of the wind velocity such as occurrence of a gust.

Further, the control mode is switched from the second control mode to the first control mode regardless of the magnitude of the pitch-angle command value when the rotation speed of the rotor has become not greater than a lower limit value which is smaller than the rated rotation speed. In this way, it is possible to prevent a decrease in the rotation speed of the rotor upon a rapid decrease in the wind velocity.
(4) A control unit for a wind turbine generator according to at least one embodiment of the present disclosure is for a wind turbine generator which includes a rotor having at least one blade. The control unit includes a control-mode switch part configured to switch a control mode of the wind turbine generator between a first control mode in which a torque of the rotor is controlled to maintain a rotation speed of the rotor at a constant speed, and a second control mode in which a pitch angle of the blade is controlled to maintain the rotation speed of the rotor at a constant speed.

The control-mode switch part is configured to, if a first condition including a condition that a torque command value of the rotor is greater than a first torque threshold value is satisfied, switch the control mode from the first control mode to the second control mode, maintain the torque command value of the time when the control mode is switched until a pitch-angle command value of the blade becomes smaller than a second pitch-angle threshold value, and increase the torque command value to a maximum value and fix the torque command value at the maximum value when the pitch-angle command value has become smaller than the second pitch-angle threshold value. Further, the control unit is configured to, if a second condition including a condition that the pitch-angle command value of the blade is greater than the first pitch-angle threshold value is satisfied, switch the control mode from the second control mode to the first control mode, maintain the pitch-angle command value of the time when the control mode is switched until the torque command value becomes smaller than the second torque threshold value, and increase the pitch-angle command value to a maximum value and fix the pitch-angle command value at the maximum value when the torque command value has become smaller than the second torque threshold value.

With the control unit for a wind turbine generator described in the above (4), too frequent switch of a control due to changes in the wind velocity is prevented, so that the wind turbine generator can be operated stably.

Specifically, with the above control unit for a wind turbine generator, the control mode is switched from the first control mode to the second control mode if the first condition is satisfied. The first condition includes a condition that the torque command value of the rotor is greater than the first torque threshold value. At this time, the torque command value at the time of switching the control mode is maintained until the pitch-angle command value of the blade becomes smaller than the second pitch-angle threshold value. Further, the torque command value is increased to the maximum value and fixed at the maximum value when the pitch angle command value has become smaller than the second pitch-angle threshold value. In this way, it is possible to avoid an event in which the pitch angle exceeds the first pitch angle threshold value to cause the control mode to return to the first control mode immediately after the switch from the first control mode to the second control mode, which enables stable operation under the second control mode.

Further, the control mode is switched from the second control mode to the first control mode if the second condition is satisfied. The second condition includes a condition that the pitch angle command value of the blade is greater than the first pitch angle threshold value. At this time, the pitch angle command value is maintained at the pitch angle command value of the time when the control mode is switched until the torque command value becomes smaller than the second torque threshold value. Then, the pitch-angle command value is increased to the maximum value and fixed at the maximum value when the torque command value has become smaller than the second torque threshold value. In this way, it is possible to avoid an event in which the torque exceeds the first torque threshold value to cause the control mode to return to the second control mode immediately after the switch from the second control mode to the first control mode, which enables stable operation under the first control mode.
(5) In some embodiments, in the above configuration (4), the control-mode switch part is configured to switch the control mode from the first control mode to the second control mode when the pitch-angle command value is fixed at the maximum value and the torque command value is greater than the first torque threshold value in the first control mode, and switch the control mode from the second control mode to the first control mode when the torque command value is fixed at the maximum value and the pitch-angle command value is greater than the first pitch-angle threshold value in the second control mode.

With the above configuration (5), the control mode is switched from the first control mode to the second control mode when the pitch-angle command value is fixed at the maximum value and the torque command value is greater than the first torque threshold value in the first control mode. As described above, it is possible to efficiently avoid an event where the control mode returns to the second control mode immediately after being switched from the second control mode to the first control mode, by adding the condition that the pitch-angle command value is fixed at the maximum value in the first control mode, as compared to a case where the control mode is switched from the first control mode to the second control mode if merely a condition that the torque command value is greater than the first torque threshold value is satisfied.

Further, the control mode is switched from the second control mode to the first control mode if the torque command value is fixed at the maximum value and the pitch-angle command value is larger than the first pitch-angle threshold value in the second control mode. As described above, it is possible to efficiently avoid an event where the control mode returns to the first control mode immediately after the switch from the first control mode to the second control mode, by adding the condition that the torque command value is fixed at the maximum value in the second control mode, as compared to a case where the control mode is switched from the second control mode to the first control mode if merely a condition that the pitch-angle command value is greater than the first pitch-angle threshold value is satisfied.
(6) In some embodiments, in the above configuration (4) or (5), the control-mode switch part is configured to switch the control mode from the first control mode to the second control mode regardless of a magnitude of the torque command value when the rotation speed of the rotor has become not less than an upper limit value which is greater than a rated rotation speed, and switch the control mode from the second control mode to the first control mode regardless of a magnitude of the pitch-angle command value, when the rotation speed of the rotor has become not greater than a lower limit value which is smaller than the rated rotation speed.

With the above configuration (6), the control mode is switched from the first control mode to the second control mode regardless of the magnitude of the torque command value, when the rotation speed of the rotor has become not less than an upper limit value which is larger than the rated rotation speed. In this way, it is possible to prevent excessive rotation of the rotor upon a rapid increase of the wind velocity such as occurrence of a gust.

Further, the control mode is switched from the second control mode to the first control mode regardless of the magnitude of the pitch-angle command value when the rotation speed of the rotor has become not greater than a lower limit value which is smaller than the rated rotation speed. In this way, it is possible to prevent a decrease in the rotation speed of the rotor upon a rapid decrease in the wind velocity.
(7) A wind turbine generator according to at least one embodiment of the present disclosure includes a rotor including at least one blade, and a control unit according to any one of the above (4) to (6).

With the above configuration (7), it is possible to provide a wind turbine generator whereby it is possible to prevent too frequent switch of the control due to changes in the wind velocity so that stable operation is enabled.

According to at least one embodiment of the present disclosure, it is possible to prevent too frequent switch of a control due to changes in wind velocity and to operate a wind turbine generator stably.

### BRIEF DESCRIPTION OF DRAWINGS

FIG. 1 is a schematic configuration diagram of a wind turbine generator according to at least one embodiment.
FIG. 2 is a block diagram of a control unit of a wind turbine generator according to one embodiment.
FIG. 3 is a flowchart of a method of controlling a wind turbine generator according to one embodiment (switch from the first control mode to the second control mode).
FIG. 4 is a flowchart of a method of controlling a wind turbine generator according to one embodiment (switch from the second control mode to the first control mode).

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

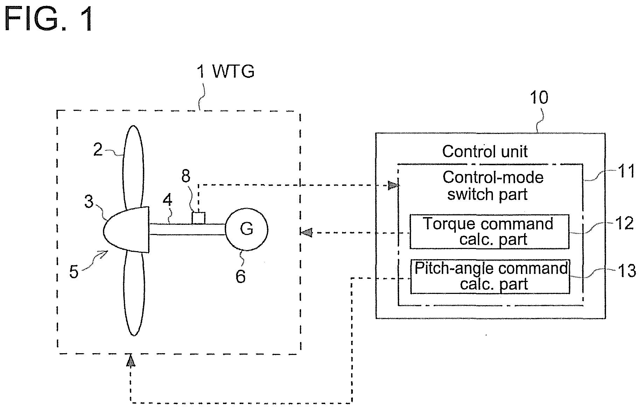

FIG. 1 is a schematic configuration diagram of a wind turbine generator 1 according to at least one embodiment.

As illustrated in the drawing, the wind turbine generator 1 according to one embodiment includes at least one blade 2, a rotation shaft 4 configured to rotate with the blade 2, and a generator 6 configured to be driven by rotation energy of a rotor 5 which includes the blade 2 and the rotation shaft 4. The wind turbine generator 1 may be disposed on the land or on the ocean.

In a specific configuration example illustrated in the drawing, a plurality of blades 2 is mounted around the hub 3. The rotation shaft 4 is coupled to the blade 2 via the hub 3, and configured to rotate with the blade 2 and the hub 3 uniformly as the rotor 5, by receiving wind by the blades 2.

While the rotation shaft 4 and the generator 6 are directly connected to each other in the illustrated example, a drivetrain such as a gear and a hydraulic transmission may be disposed between the rotation shaft 4 and the generator 6. Here, a hydraulic transmission includes a hydraulic pump mounted to the rotation shaft 4 and a hydraulic motor connected to the hydraulic pump via a high pressure oil line and a low pressure oil line. The pressurized oil produced by the hydraulic pump is supplied to the hydraulic motor via the high pressure line, and the hydraulic motor is driven by this pressurized oil. The low pressure working oil having performed work in the hydraulic motor is returned again to the hydraulic pump via the low pressure oil line. The output shaft of the hydraulic motor is connected to the input shaft of the generator 6, so that rotation of the hydraulic motor is inputted to the generator 6 to generate electric power.

The above wind turbine generator 1 further includes a control unit 10 for controlling the rotation speed of the rotor 5.

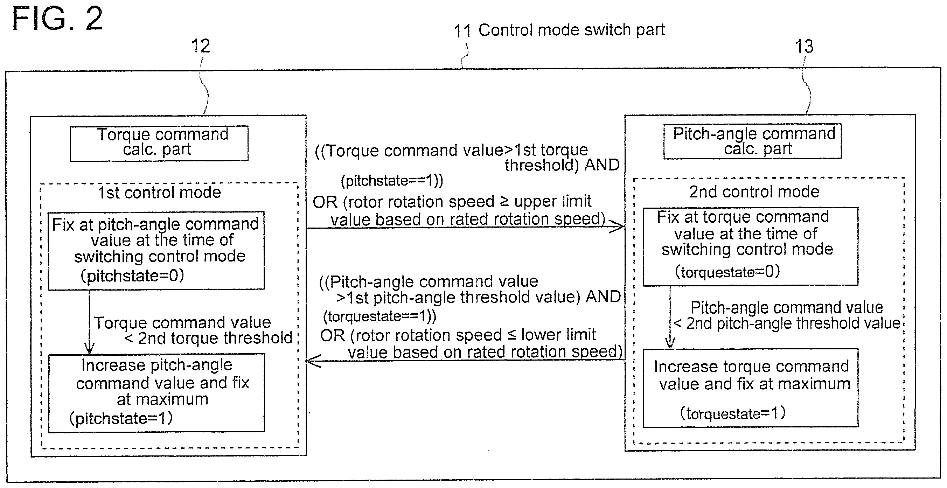

With reference to FIGs. 1 and 2, the specific configuration of the control unit 10 will now be described. FIG. 2 is a block diagram of the control unit 10 of the wind turbine generator 1 according to one embodiment.

The control unit 10 includes a control-mode switch part 11 configured to switch the control mode of the wind turbine generator 1.

The control mode switch part 11 is configured to switch the control mode of the wind turbine generator 1 between the first control mode and the second control mode. In the first control mode, the torque of the rotor 5 is controlled to maintain the rotation speed of the rotor 5 at a predetermined rotation speed. In the second control mode, the pitch angles of the blades 2 are controlled to maintain the rotation speed of the rotor 5 at a constant speed.

Specifically, the control-mode switch part 11 includes a torque command calculation part 12 and a pitch-angle command calculation part 13.

In the first control mode, the torque-command calculation part 12 is configured to calculate a torque command value such that the rotation speed becomes a predetermined value, based on the rotation speed of the rotor 5 measured by a rotation-speed sensor 8 (see FIG. 1) mounted to the rotor 5. The torque-command calculation part 12 may calculate a torque command value such that the rotation speed of the rotor 5 becomes a constant value. The torque command value calculated here is transmitted to a torque control mechanism of the wind turbine generator 1, so that the torque control mechanism controls the torque of the rotor 5 to be the torque command value. For instance, in a case of a wind turbine generator including a hydraulic transmission, the torque control mechanism is a mechanism for varying a displacement of the hydraulic pump. Alternatively, in a case of a wind turbine generator including a gear-type drivetrain, the torque control mechanism is a mechanism for varying an electromagnetic torque of the generator 6.

In the second control mode, the pitch-angle command calculation part 13 is configured to calculate a pitch angle such that the rotation speed of the rotor 5 becomes a predetermined value, based on the rotation speed measured by the rotation speed sensor 8. The pitch command value calculated here is transmitted to a pitch drive mechanism of the blades 2 so that the pitch drive mechanism controls the pitch angles of the blades 2 to be the pitch-angle command value calculated by the pitch-angle command calculation part 13.

In some embodiments, the control-mode switch part 11 is configured to switch the control mode from the first control mode to the second control mode when the first condition is satisfied. The first condition includes a condition that the torque command value of the rotor 5 is greater than the first torque threshold value. Here, the first condition may include conditions other than the condition that the torque command value of the rotor 5 is greater than the first torque threshold value. For instance, the first condition is a condition that the torque command value of the rotor 5 is greater than the first torque threshold value, and the pitch-angle command value is the maximum value.

After the control mode is switched to the second control mode, the pitch-angle command calculation part 13 maintains the torque command value at the time of switching the control mode until the pitch-angle command value of the blades 2 becomes smaller than the second pitch-angle threshold value, and increases the torque command value to the maximum value and fixes the torque command value at the maximum value when the pitch-angle command value has become smaller than the second pitch-angle threshold value. Here, the second pitch-angle threshold value is set to be a value smaller than the first pitch-angle threshold value used in the switch from the second control mode to the first control mode. This first pitch-angle threshold value will be described later in detail. Further, in the present embodiment, the blades have a larger pitch angle in a fine state than in a feather state. For instance, the pitch angle is 100% at a full-fine pitch angle and 0% at a full-feather pitch angle.

Specifically, immediately after the switch from the first control mode to the second control mode, the torque-command calculation part 12 maintains the torque command value at the time of switching the control mode, until the pitch-angle command value of the blades 2 becomes smaller than the second pitch-angle threshold value. In this period, the torque does not increase, so it is possible to maintain the rotation speed of the rotor 5 without causing a considerable increase in the pitch angle even if the wind velocity is not so high. As a result, it is possible to avoid an event where the pitch angle exceeds the first pitch angle threshold value to cause the control mode to return to the first control mode immediately after the switch from the first control mode to the second control mode.

Further, the torque command calculation part 12 is configured to increase the torque command value to the maximum value and fix the torque command value at the maximum value when the pitch-angle command value has become smaller than the second pitch-angle threshold value. Since the second pitch-angle threshold value is set at a value smaller than the first pitch-angle threshold value used in the switch from the second control mode to the first control mode, there is an adequate gap between the pitch-angle command value and the first pitch-angle threshold value when the pitch-angle command value has become smaller than the second pitch-angle threshold value. Thus, it is possible to maintain a state where the pitch angle is lower than the first pitch-angle threshold value even if the wind velocity varies to a certain extent. In this way, stable operation under the second control mode is enabled.

Further, the control-mode switch part 11 is configured to switch the control mode from the second control mode to the first control mode when the second condition is satisfied. The second condition includes a condition that the pitch-angle command value of the blades 2 is larger than the first pitch-angle threshold value. Here, the second condition may include conditions other than the condition that the pitch-angle command value of the blades 2 is larger than the first pitch-angle threshold value. For instance, the second condition is a condition that the pitch-angle command value of the blades 2 is larger than the first pitch-angle threshold value, and the torque-command value is the maximum value.

After the control mode is switched to the first control mode, the torque-command calculation part 12 maintains the pitch-angle command value at the time of switching the control mode, until the torque command value becomes smaller than the second torque threshold value, and the control-mode switch part 11 increases the pitch-angle command value to the maximum value and fixes the pitch-angle command value at the maximum value when the torque command value has become smaller than the second torque threshold value. Here, the second torque threshold value is set at a value smaller than the first torque threshold value used in the switch from the first control mode to the second control mode.

Specifically, immediately after the switch from the second control mode to the first control mode, the pitch-angle command calculation part 13 maintains the pitch-angle command value at the time of the switch of the control mode, during a period until the torque command value becomes smaller than the second torque threshold value. In this period, the pitch angle does not increase, so it is possible to maintain the rotation speed of the rotor 5 without causing a considerable increase in the torque even if the wind velocity does not become so low. In this way, it is possible to avoid an event where the torque exceeds the first torque threshold value to cause the control mode to return to the second control mode immediately after the switch from the second control mode to the first control mode.

Further, the pitch-angle command calculation part 13 is configured to increase the pitch-angle command value to the maximum value and fix the pitch-angle command value at the maximum value when the torque command value has become smaller than the second torque threshold value. Since the second torque command value is set at a value smaller than the first torque value used in the switch from the first control mode to the second control mode, there is an adequate gap between the torque command value and the first torque threshold value when the torque command value has become smaller than the second torque threshold value. Thus, it is possible to maintain a state where the torque is lower than the first torque threshold value even if the wind velocity varies to a certain extent. In this way, stable operation under the first control mode is enabled.

In one embodiment, the control-mode switch part 11 is configured to switch the control mode from the first control mode to the second control mode, when the pitch-angle command value is fixed at the maximum value and the torque command value is greater than the first torque threshold value in the first control mode.

When the pitch-angle command value is fixed at the maximum value in the first control mode, it means that the wind velocity has become low enough and the torque command value has become lower than the second torque threshold value after the switch from the second control mode to the first control mode. As described above, it is possible to efficiently avoid an event where the control mode returns to the second control mode immediately after being switched from the second control mode to the first control mode, by adding the condition that the pitch-angle command value is fixed at the maximum value in the first control mode, as compared to a case where the control mode is switched from the first control mode to the second control mode if merely a condition that the torque command value is greater than the first torque threshold value is satisfied.

Further, the control-mode switch part 11 switches the control mode from the second control mode to the first control mode when the torque command value is fixed at the maximum value and the pitch-angle command value is greater than the first pitch-angle threshold value in the second control mode.

When the torque command value is fixed at the maximum value in the second control mode, it means that the wind velocity has increased high enough and the pitch-angle command value has become lower than the second pitch-angle threshold value after the switch from the first control mode to the second control mode. As described above, it is possible to efficiently avoid an event where the control mode returns to the first control mode immediately after being switched from the first control mode to the second control mode, by adding the condition that the torque command value is fixed at the maximum value in the second control mode, as compared to a case where the control mode is switched from the second control mode to the first control mode if merely a condition that the pitch-angle command value is greater than the first pitch-angle threshold value is satisfied.

The control-mode switch part 11 may further include the following configuration.

The control-mode switch part 11 is configured to switch the control mode from the first control mode to the second control mode regardless of the magnitude of the torque command value, when the rotation speed of the rotor 5 has become not less than an upper limit value which is larger than the rated rotation speed. For instance, when the rotation speed of the rotor 5 has become 1.1 times larger than the rated rotation speed, the control mode is switched from the first control mode to the second control mode.

In this way, it is possible to prevent excessive rotation of the rotor 5 upon a rapid increase in the wind velocity such as occurrence of a gust.

Further, the control-mode switch part 11 is configured to switch the control mode from the second control mode to the first control mode regardless of the magnitude of the pitch-angle command value when the rotation speed of the rotor 5 has become not greater than a lower limit value which is smaller than the rated rotation speed. For instance, when the rotation speed of the rotor 5 has become 0.9 times smaller than the rated rotation speed, the control mode is switched from the second control mode to the first control mode. In this way, it is possible to prevent a decrease in the rotation speed of the rotor 5 upon a rapid decrease in the wind velocity.

Next, the control method of the wind turbine generator 1 according to one embodiment will be described. Here, the reference signs illustrated in the above described FIGs. 1 and 2 are used in the description where appropriate.

A method of controlling the wind turbine generator 1 according to one embodiment includes a control-mode switch step of switching the control mode of the wind turbine generator 1 between the first control mode and the second control mode. In the first control mode, the torque of the rotor 5 is controlled to control the rotation speed of the rotor 5 to be a predetermined rotation speed. In the second control mode, the pitch angles of the blades 2 are controlled to maintain the rotation speed of the rotor 5 at a constant speed.

In the control-mode switch step, the control mode is switched from the first control mode to the second control mode when the first condition is satisfied. The first condition includes a condition that the torque command value of the rotor 5 is larger than the first torque threshold value. In the second control mode, the pitch-angle command calculation part 13 calculates a pitch-angle command value such that the rotation speed of the rotor 5 stays constant, and outputs the pitch-angle command value to the pitch drive mechanism. Then, the torque command value at the time of switching the control mode is maintained until the pitch-angle command value of the blades 2 becomes smaller than the second pitch-angle threshold value, and the torque command value is increased to the maximum value and fixed at the maximum value when the pitch-angle command value has become smaller than the second pitch-angle threshold value.

Further, when the second condition including a condition that the pitch-angle command value of the blade is larger than the first pitch-angle threshold value is satisfied, the control mode is switched from the second control mode to the first control mode. Then, the pitch-angle command value at the time of switching the control mode is maintained until the torque command value becomes smaller than the second torque threshold value, and the pitch-angle command value is increased to the maximum value and fixed at the maximum value when the torque command value has become smaller than the second torque threshold value.

In one embodiment, in the control-mode switch step, the control mode is switched from the first control mode to the second control mode when the pitch-angle command value is fixed at the maximum value and the torque command value is larger than the first torque threshold value in the first control mode.

Further, the control mode is switched from the second control mode to the first control mode when the torque command value is fixed at the maximum value and the pitch-angle command value is larger than the first pitch-angle threshold value in the second control mode.

Further, in the control-mode switch step, the control mode may be switched from the first control mode to the second control mode regardless of the magnitude of the torque command value when the rotation speed of the rotor 5 has become not less than an upper limit value which is larger than the rated rotation speed.

Further, the control mode may be switched from the second control mode to the first control mode regardless of the magnitude of the pitch-angle command value when the rotation speed of the rotor 5 has become not more than a lower limit value which is smaller than the rated rotation speed.

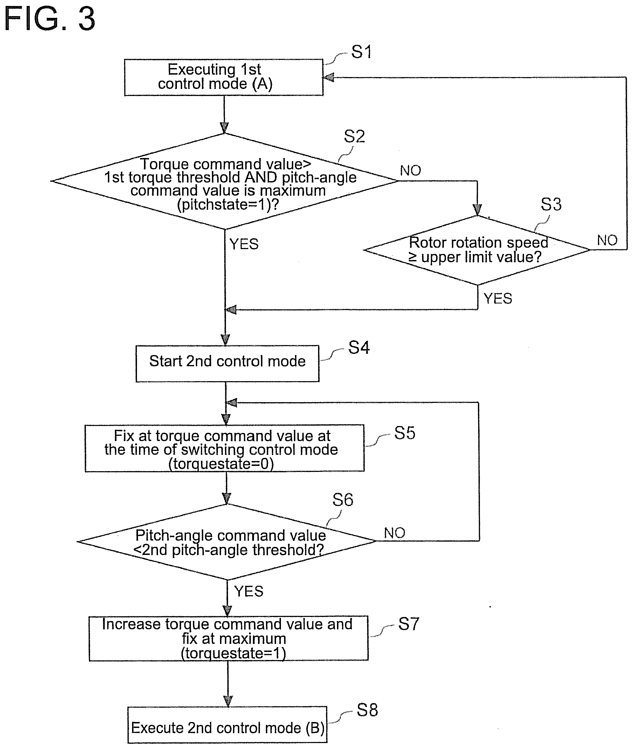

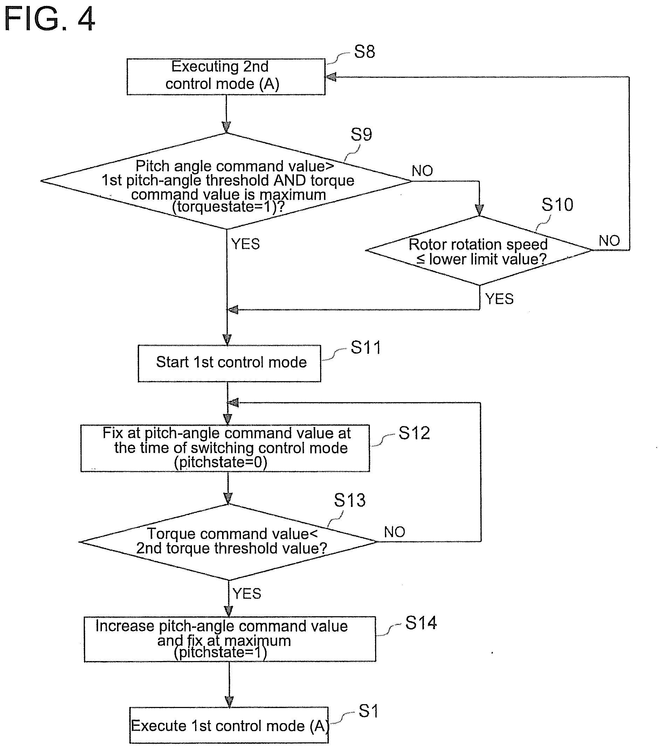

Now, with reference to FIGs. 3 and 4, an example of a specific method of controlling the wind turbine generator 1 will be described. Also in the following description, the reference signs of the constituent members illustrated in FIGs. 1 and 2 are used where appropriate.

FIG. 3 is a flowchart of a method of controlling a wind turbine generator 1 (switch from the first control mode to the second control mode) according to one embodiment.

As illustrated in the drawing, when the rotor rotation speed is controlled through the torque in the first control mode in step S1, the control mode switch part 11 determines whether the first condition is satisfied in step S2. The first condition is a condition that the torque command value is greater than the first torque threshold value and pitchstate=1, which represents that the pitch-angle command value is fixed at the maximum value. If the first condition is not satisfied, it is determined whether the rotor rotation speed is not less than an upper limit value which is greater than the rated rotation speed in step S3. If the rotor rotation speed is less than the upper limit value, the first control mode (pitchstate=1) of step S1 is continued.

If the first condition is satisfied in step S2, or if the rotor rotation speed is not less than the upper limit value in step S3, the control mode is switched to the second control mode in step S4, and the control of the rotation speed of the rotor through the pitch angle is started.

In the second control mode, firstly in step S5, the torque command value is fixed at the torque command value at the time of switching the control mode. The torque command value here is smaller than the maximum value, and the state here is referred to as torquestate=0. While the second control mode is being executed (torquestate=0), it is determined whether the pitch angle command value is smaller than the second pitch-angle threshold value in step S6. If the pitch angle command value is not less than the second pitch-angle threshold value, a state where the torque command value is fixed at the torque command value at the time of switching the control mode is maintained (torquestate=0). Once the pitch-angle command value becomes smaller than the second pitch-angle threshold value, the torque command value is increased and fixed at the maximum value in step S7. This state is referred to as torquestate=1, and the second control mode is executed (torquestate=1).

FIG. 4 is a flowchart of a method of controlling the wind turbine generator 1 according to one embodiment, which is a method of switching the control mode from the second control mode to the first control mode.

As illustrated in the drawing, while the rotation speed of the rotor is controlled through the pitch angle in the second control mode in step S8, the control mode switch part 11 determines whether the second condition is satisfied in step S9. The second condition is a condition that the pitch angle command value is greater than the first pitch angle threshold value and torquestate=1, which represents a state where the torque command value is fixed at the maximum value. If the second condition is not satisfied, subsequently, it is determined whether the rotation speed of the rotor is not greater than a lower limit value which is smaller than the rated rotation speed in step S10. If the rotation speed of the rotor is greater than the lower limit value, the second control mode (torquestate=1) of step S8 is continued.

If the second condition is satisfied in step S9, or the rotation speed of the rotor is not greater than the lower limit value in step S10, the control mode is switched to the first control mode in step S11, and the control of the rotation speed of the rotor through the torque is started.

In the first control mode, firstly in step S12, the pitch angle command value is fixed at the pitch angle command value of the time when the control mode is switched. The pitch angle command value here is smaller than the maximum value, and this state is referred to as pitchstate=0. While the second control mode is being executed (pitchstate=0), it is determined whether the torque command value is smaller than the second torque threshold value in step S13. If the torque command value is not less than the second torque command value, a state in which the pitch angle command value is fixed at the pitch angle command value at the time of switching the control mode is continued (pitchstate=0). Once the torque command value becomes smaller than the second torque threshold value, the pitch angle command value is increased and fixed at the maximum value in step S14. This state is referred to as pitchstate=1, and the first control mode is executed (pitchstate=1).

In this way, it is possible to avoid an event in which the pitch angle exceeds the first pitch angle threshold value to cause the control mode to return to the first control mode immediately after the switch from the first control mode to the second control mode, which enables stable operation by the second control mode. Similarly, it is possible to avoid an event in which the torque exceeds the first torque threshold value to cause the control mode to return to the second control mode immediately after the switch from the second control mode to the first control mode, which enables stable operation by the first control mode.

Further, when the rotation speed of the rotor 5 has become not less than an upper limit value which is greater than the rated rotation speed, the control mode is switched from the first control mode to the second control mode regardless of the magnitude of the torque command value. In this way, it is possible to prevent excessive rotation of the rotor 5 upon, for instance, a rapid increase in the wind velocity such as occurrence of a gust. Similarly, when the rotation speed of the rotor 5 has become not greater than a lower limit value which is smaller than the rated rotation speed, the control mode is switched from the second control mode to the first control mode regardless of the magnitude of the pitch angle command value. In this way, it is possible to prevent a decrease in the rotation speed of the rotor 5 upon a rapid decrease in the wind velocity.

As descried above, according to the present embodiment, it is possible to prevent too frequent switch of the control due to changes in the wind velocity, which enables stable operation of the wind turbine generator 1.

Embodiments of the present invention were described in detail above, but the present invention is not limited thereto, and various amendments and modifications may be implemented within a scope that does not depart from the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, expressions such as "comprise", "include", "have", "contain" and "constitute" are not intended to be exclusive of other components.

## Claims

1. A method of controlling a wind turbine (1) generator including a rotor (5) having at least one blade (2), the method comprising
a control-mode switch step (S2, S9) of switching a control mode of the wind turbine generator (1) between a first control mode in which a torque of the rotor (5) is controlled to control a rotation speed of the rotor (5) to be a predetermined rotation speed, and a second control mode in which a pitch angle of the blade is controlled to maintain the rotation speed of the rotor at a constant speed,
wherein, the control-mode switch step (S2, S9) includes:
if a first condition including a condition that a torque command value of the rotor (5) is greater than a first torque threshold value is satisfied, switching the control mode from the first control mode to the second control mode, maintaining the torque command value of the time when the control mode is switched until a pitch-angle command value of the blade (2) becomes smaller than a second pitch-angle threshold value, and increasing the torque command value to a maximum value and fixing the torque command value at the maximum value when the pitch-angle command value has become smaller than the second pitch-angle threshold value; and
if a second condition including a condition that the pitch-angle command value of the blade (2) is greater than a first pitch-angle threshold value is satisfied, switching the control mode from the second control mode to the first control mode, maintaining the pitch-angle command value of the time when the control mode is switched until the torque command value becomes smaller than a second torque threshold value, and increasing the pitch-angle command value to a maximum value and fixing the pitch-angle command value at the maximum value when the torque command value has become smaller than the second torque threshold value,
wherein the second pitch-angle threshold value is smaller than the first pitch-angle threshold value, and the second torque threshold value is smaller than the first torque threshold value.

2. The method of controlling a wind turbine generator (1) according to claim 1, wherein, in the control-mode switch step (S2, S9),
the control mode is switched from the first control mode to the second control mode when the pitch-angle command value is fixed at the maximum value and the torque command value is greater than the first torque threshold value in the first control mode, and
the control mode is switched from the second control mode to the first control mode when the torque command value is fixed at the maximum value and the pitch-angle command value is greater than the first pitch-angle threshold value in the second control mode.

3. The method of controlling a wind turbine generator (1) according to claim 1 or 2, wh
erein, in the control-mode switch step (S2, S9),
the control mode is switched from the first control mode to the second control mode regardless of a magnitude of the torque command value when the rotation speed of the rotor (5) has become not less than an upper limit value which is greater than a rated rotation speed, and
the control mode is switched from the second control mode to the first control mode regardless of a magnitude of the pitch-angle command value, when the rotation speed of the rotor (5) has become not greater than a lower limit value which is smaller than the rated rotation speed.

4. A control unit (10) of a wind turbine generator (1) which includes a rotor (5) having at least one blade (2), the control unit comprising
a control-mode switch part (11) configured to switch a control mode of the wind turbine generator (1) between a first control mode in which a torque of the rotor is controlled to maintain a rotation speed of the rotor (5) at a constant speed, and a second control mode in which a pitch angle of the blade (2) is controlled to maintain the rotation speed of the rotor (5) at a constant speed,
wherein the control-mode switch part is configured to:
if a first condition including a condition that a torque command value of the rotor (5) is greater than a first torque threshold value is satisfied, switch the control mode from the first control mode to the second control mode, maintain the torque command value of the time when the control mode is switched until a pitch-angle command value of the blade (2) becomes smaller than a second pitch-angle threshold value, and increase the torque command value to a maximum value and fix the torque command value at the maximum value when the pitch-angle command value has become smaller than the second pitch-angle threshold value; and
if a second condition including a condition that the pitch-angle command value of the blade (2) is greater than a first pitch-angle threshold value is satisfied, switch the control mode from the second control mode to the first control mode, maintain the pitch-angle command value of the time when the control mode is switched until the torque command value becomes smaller than a second torque threshold value, and increases the pitch-angle command value to a maximum value and fix the pitch-angle command value at the maximum value when the torque command value has become smaller than the second torque threshold value,
wherein the second pitch-angle threshold value is smaller than the first pitch-angle threshold value, and the second torque threshold value is smaller than the first torque threshold value.

5. The control unit (10) of a wind turbine generator (1) according to claim 4,
wherein the control-mode switch (11) part is configured to
switch the control mode from the first control mode to the second control mode when the pitch-angle command value is fixed at the maximum value and the torque command value is greater than the first torque threshold value in the first control mode, and
switch the control mode from the second control mode to the first control mode when the torque command value is fixed at the maximum value and the pitch-angle command value is greater than the first pitch-angle threshold value in the second control mode.

6. The control unit (10) of a wind turbine generator (1) according to claim 4 or 5,
wherein the control-mode switch part (11) is configured to
switch the control mode from the first control mode to the second control mode regardless of a magnitude of the torque command value when the rotation speed of the rotor (5) has become not less than an upper limit value which is greater than a rated rotation speed, and
switch the control mode from the second control mode to the first control mode regardless of a magnitude of the pitch-angle command value, when the rotation speed of the rotor (5) has become not greater than a lower limit value which is smaller than the rated rotation speed.

7. A wind turbine generator (1) comprising: a rotor (5) including at least one blade (2); and a control unit (10) according to any one of claims 4 to 6.

## Patentansprüche

1. Verfahren zum Steuern einer Windkraftanlage (1), die einen Rotor (5) umfasst, der mindestens ein Rotorblatt (2) aufweist, wobei das Verfahren umfasst:
einen Steuermodus-Umschaltschritt (S2, S9) zum Umschalten eines Steuermodus der Windkraftanlage (1) zwischen einem ersten Steuermodus, in dem ein Drehmoment des Rotors (5) gesteuert wird, um eine Drehgeschwindigkeit des Rotors (5) derart zu steuern, dass sie eine vorgegebene Drehgeschwindigkeit ist, und einem zweiten Steuermodus, in dem ein Pitchwinkel des Rotorblatts gesteuert wird, um die Drehgeschwindigkeit des Rotors auf einer konstanten Geschwindigkeit zu halten,
wobei der Steuermodus-Umschaltschritt (S2, S9) umfasst:
wenn eine erste Bedingung, die eine Bedingung umfasst, dass ein Drehmomentbefehlswert des Rotors (5) größer als ein erster Drehmomentschwellenwert ist, erfüllt ist, Umschalten des Steuermodus von dem ersten Steuermodus zu dem zweiten Steuermodus, Beibehalten des Drehmomentbefehlswerts der Zeit, wenn der Steuermodus umgeschaltet wird, bis ein Pitchwinkelbefehlswert des Rotorblatts (2) kleiner als ein zweiter Pitchwinkelschwellenwert wird, und Erhöhen des Drehmomentbefehlswerts auf einen Maximalwert und Fixieren des Drehmomentbefehlswerts auf dem Maximalwert, wenn der Pitchwinkelbefehlswert kleiner als der zweite Pitchwinkelschwellenwert geworden ist, und,
wenn eine zweite Bedingung, die eine Bedingung umfasst, dass der Pitchwinkelbefehlswert des Rotorblatts (2) größer als ein erster Pitchwinkelschwellenwert ist, erfüllt ist, Umschalten des Steuermodus von dem zweiten Steuermodus zu dem ersten Steuermodus, Beibehalten des Pitchwinkelbefehlswerts der Zeit, wenn der Steuermodus umgeschaltet wird, bis der Drehmomentbefehlswert kleiner als ein zweiter Drehmomentschwellenwert wird, und Erhöhen des Pitchwinkelbefehlswerts auf einen Maximalwert und Fixieren des Pitchwinkelbefehlswerts auf dem Maximalwert, wenn der Drehmomentbefehlswert kleiner als der zweite Drehmomentschwellenwert geworden ist,
wobei der zweite Pitchwinkelschwellenwert kleiner als der erste Pitchwinkelschwellenwert ist und der zweite Drehmomentschwellenwert kleiner als der erste Drehmomentschwellenwert ist.

2. Verfahren zum Steuern einer Windkraftanlage (1) nach Anspruch 1, wobei in dem Steuermodusumschaltschritt (S2, S9)
der Steuermodus von dem ersten Steuermodus zu dem zweiten Steuermodus umgeschaltet wird, wenn der Pitchwinkelbefehlswert auf dem Maximalwert fixiert ist und in dem ersten Steuermodus der Drehmomentbefehlswert größer als der erste Drehmomentschwellenwert ist, und
der Steuermodus von dem zweiten Steuermodus zu dem ersten Steuermodus umgeschaltet wird, wenn der Drehmomentbefehlswert auf dem Maximalwert fixiert ist und in dem zweiten Steuermodus der Pitchwinkelbefehlswert größer als der erste Pitchwinkelschwellenwert ist.

3. Verfahren zum Steuern einer Windkraftanlage (1) nach Anspruch 1 oder 2,
wobei in dem Steuermodusumschaltschritt (S2, S9),
der Steuermodus von dem ersten Steuermodus zu dem zweiten Steuermodus umgeschaltet wird, unabhängig von einer Größe des Drehmomentbefehlswerts, wenn die Drehgeschwindigkeit des Rotors (5) nicht kleiner als ein oberer Grenzwert geworden ist, der größer als eine Nenndrehgeschwindigkeit ist, und
der Steuermodus von dem zweiten Steuermodus zu dem ersten Steuermodus umgeschaltet wird, unabhängig von einer Größe des Pitchwinkelbefehlswerts, wenn die Drehgeschwindigkeit des Rotors (5) nicht größer als ein unterer Grenzwert geworden ist, der kleiner als die Nenndrehgeschwindigkeit ist.

4. Steuerungseinheit (10) einer Windkraftanlage (1), die einen Rotor (5) umfasst, der mindestens ein Rotorblatt (2) aufweist, wobei die Steuerungseinheit umfasst:
einen Steuermodusumschaltteil (11), der dazu ausgebildet ist, einen Steuermodus der Windkraftanlage (1) zwischen einem ersten Steuermodus, in dem ein Drehmoment des Rotors gesteuert wird, um eine Drehgeschwindigkeit des Rotors (5) auf einer konstanten Geschwindigkeit zu halten, und einem zweiten Steuermodus, in dem ein Pitchwinkel des Rotorblatts (2) gesteuert wird, um die Drehgeschwindigkeit des Rotors (5) auf einer konstanten Geschwindigkeit zu halten, umzuschalten,
wobei der Steuermodusumschaltteil dazu ausgebildet ist:
wenn eine erste Bedingung, die eine Bedingung umfasst, dass ein Drehmomentbefehlswert des Rotors (5) größer als ein erster Drehmomentschwellenwert ist, erfüllt ist, den Steuermodus von dem ersten Steuermodus zu dem zweiten Steuermodus umzuschalten, den Drehmomentbefehlswert der Zeit, wenn der Steuermodus umgeschaltet wird, beizubehalten, bis ein Pitchwinkelbefehlswert des Rotorblatts (2) kleiner als ein zweiter Pitchwinkelschwellenwert wird, und den Drehmomentbefehlswert auf einen Maximalwert zu erhöhen und den Drehmomentbefehlswert auf dem Maximalwert zu fixieren, wenn der Pitchwinkelbefehlswert kleiner als der zweite Pitchwinkelschwellenwert geworden ist, und,
wenn eine zweite Bedingung, die eine Bedingung umfasst, dass der Pitchwinkelbefehlswert des Rotorblatts (2) größer als ein erster Pitchwinkelschwellenwert ist, erfüllt ist, den Steuermodus von dem zweiten Steuermodus zu dem ersten Steuermodus umzuschalten, den Pitchwinkelbefehlswert der Zeit, wenn der Steuermodus umgeschaltet wird, beizubehalten, bis der Drehmomentbefehlswert kleiner als ein zweiter Drehmomentschwellenwert wird, und den Pitchwinkelbefehlswert auf einen Maximalwert zu erhöhen und den Pitchwinkelbefehlswert auf dem Maximalwert zu fixieren, wenn der Drehmomentbefehlswert kleiner als der zweite Drehmomentschwellenwert geworden ist,
wobei der zweite Pitchwinkelschwellenwert kleiner als der erste Pitchwinkelschwellenwert ist und der zweite Drehmomentschwellenwert kleiner als der erste Drehmomentschwellenwert ist.

5. Steuerungseinheit (10) einer Windkraftanlage (1) nach Anspruch 4,
wobei der Steuermodusumschaltteil (11) dazu ausgebildet ist,
den Steuermodus von dem ersten Steuermodus zu dem zweiten Steuermodus umzuschalten, wenn der Pitchwinkelbefehlswert auf dem Maximalwert fixiert ist und in dem ersten Steuermodus der Drehmomentbefehlswert größer als der erste Drehmomentschwellenwert ist, und
den Steuermodus von dem zweiten Steuermodus zu dem ersten Steuermodus umzuschalten, wenn der Drehmomentbefehlswert auf dem Maximalwert fixiert ist und in dem zweiten Steuermodus der Pitchwinkelbefehlswert größer als erste Pitchwinkelschwellenwert ist.

6. Steuerungseinheit (10) einer Windkraftanlage (1) nach Anspruch 4 oder 5,
wobei der Steuermodusumschaltteil (11) dazu ausgebildet ist,
den Steuermodus von dem ersten Steuermodus zu dem zweiten Steuermodus umzuschalten, unabhängig von einer Größe des Drehmomentbefehlswerts, wenn die Drehgeschwindigkeit des Rotors (5) nicht kleiner als ein oberer Grenzwert geworden ist, der größer als eine Nenndrehgeschwindigkeit ist, und
den Steuermodus von dem zweiten Steuermodus zu dem ersten Steuermodus umzuschalten, unabhängig von einer Größe des Pitchwinkelbefehlswerts, wenn die Drehgeschwindigkeit des Rotors (5) nicht größer als ein unterer Grenzwert geworden ist, der kleiner als die Nenndrehgeschwindigkeit ist.

7. Windkraftanlage (1), umfassend: einen Rotor (5), der mindestens ein Rotorblatt (2) umfasst, und eine Steuerungseinheit (10) nach einem beliebigen der Ansprüche 4 bis 6.

## Revendications

1. Procédé de commande d'un générateur d'éolienne (1) comprenant un rotor (5) ayant au moins une pale (2), le procédé comprenant
une étape de commutation du mode de contrôle (S2, S9) consistant à commuter un mode de contrôle du générateur d'éolienne (1) entre un premier mode de contrôle, dans lequel un couple du rotor (5) est contrôlé pour vérifier qu'une vitesse de rotation du rotor (5) est à une vitesse de rotation prédéterminée, et un second mode de contrôle, dans lequel un angle de tangage de la pale est contrôlé pour maintenir la vitesse de rotation du rotor à une vitesse constante,
dans lequel l'étape de commutation du mode de contrôle (S2, S9) comprend :
si une première condition comprenant une condition, dans laquelle une valeur de commande de couple du rotor (5) est supérieure à une première valeur de seuil de couple, est satisfaite, la commutation du mode de contrôle du premier mode de contrôle au second mode de contrôle, le maintien de la valeur de commande de couple pendant le temps pendant lequel le mode de contrôle est commuté, jusqu'à ce qu'une valeur de commande d'angle de tangage de la pale (2) devienne inférieure à une seconde valeur de seuil d'angle de tangage, et l'augmentation de la valeur de commande de couple à une valeur maximale et la fixation de la valeur de commande de couple à la valeur maximale lorsque la valeur de commande d'angle de tangage est devenue inférieure à la seconde valeur de seuil d'angle de tangage ; et
si une seconde condition comprenant une condition, dans laquelle la valeur de commande d'angle de tangage de la pale (2) est supérieure à une première valeur de seuil d'angle de tangage, est satisfaite, la commutation du mode de contrôle du second mode de contrôle au premier mode de contrôle, le maintien de la valeur de commande d'angle de tangage pendant le temps pendant lequel le mode de contrôle est commuté, jusqu'à ce que la valeur de commande de couple devienne inférieure à une seconde valeur de seuil de couple, et l'augmentation de la valeur de commande d'angle de tangage à une valeur maximale et la fixation de la valeur de commande d'angle de tangage à la valeur maximale lorsque la valeur de commande de couple est devenue inférieure à la seconde valeur de seuil de couple,
dans lequel la seconde valeur de seuil d'angle de tangage est inférieure à la première valeur de seuil d'angle de tangage, et la seconde valeur de seuil de couple est inférieure à la première valeur de seuil de couple.

2. Procédé de commande d'un générateur d'éolienne (1) selon la revendication 1, dans lequel, dans l'étape de commutation du mode de contrôle (S2, S9),
le mode de contrôle est commuté du premier mode de contrôle au second mode de contrôle lorsque la valeur de commande d'angle de tangage est fixée à la valeur maximale et la valeur de commande de couple est supérieure à la première valeur de seuil de couple dans le premier mode de contrôle, et
le mode de contrôle est commuté du second mode de contrôle au premier mode de contrôle lorsque la valeur de commande de couple est fixée à la valeur maximale et la valeur de commande d'angle de tangage est supérieure à la première valeur de seuil d'angle de tangage dans le second mode de contrôle.

3. Procédé de commande d'un générateur d'éolienne (1) selon la revendication 1 ou 2,
dans lequel, dans l'étape de commutation du mode de contrôle (S2, S9),
le mode de contrôle est commuté du premier mode de contrôle au second mode de contrôle, indépendamment d'une ampleur de la valeur de commande de couple, lorsque la vitesse de rotation du rotor (5) est devenue au moins égale à une valeur limite supérieure, qui est supérieure à une vitesse de rotation nominale, et
le mode de contrôle est commuté du second mode de contrôle au premier mode de contrôle, indépendamment d'une ampleur de la valeur de commande d'angle de tangage, lorsque la vitesse de rotation du rotor (5) est devenue non supérieure à une valeur limite inférieure, qui est inférieure à la vitesse de rotation nominale.

4. Unité de commande (10) d'un générateur d'éolienne (1) qui comprend un rotor (5) ayant au moins une pale (2), l'unité de commande comprenant :
une partie de commutation du mode de contrôle (11) configurée pour commuter un mode de contrôle du générateur d'éolienne (1) entre un premier mode de contrôle, dans lequel un couple du rotor est contrôlé pour maintenir une vitesse de rotation du rotor (5) à une vitesse constante, et un second mode de contrôle, dans lequel un angle de tangage de la pale (2) est contrôlé pour maintenir la vitesse de rotation du rotor (5) à une vitesse constante,
dans laquelle la partie de commutation du mode de contrôle est configurée pour :
si une première condition comprenant une condition, dans laquelle une valeur de commande de couple du rotor (5) est supérieure à une première valeur de seuil de couple, est satisfaite, commuter le mode de contrôle du premier mode de contrôle au second mode de contrôle, maintenir la valeur de commande de couple pendant le temps pendant lequel le mode de contrôle est commuté, jusqu'à ce qu'une valeur de commande d'angle de tangage de la pale (2) devienne inférieure à une seconde valeur de seuil d'angle de tangage, et augmenter la valeur de commande de couple à une valeur maximale et fixer la valeur de commande de couple à la valeur maximale lorsque la valeur de commande d'angle de tangage est devenue inférieure à la seconde valeur de seuil d'angle de tangage ; et
si une seconde condition comprenant une condition, dans laquelle la valeur de commande d'angle de tangage de la pale (2) est supérieure à une première valeur de seuil d'angle de tangage, est satisfaite, commuter le mode de contrôle du second mode de contrôle au premier mode de contrôle, maintenir la valeur de commande d'angle de tangage pendant le temps pendant lequel le mode de contrôle est commuté, jusqu'à ce que la valeur de commande de couple devienne inférieure à une seconde valeur de seuil de couple, et augmenter la valeur de commande d'angle de tangage à une valeur maximale et fixer la valeur de commande d'angle de tangage à la valeur maximale lorsque la valeur de commande de couple est devenue inférieure à la seconde valeur de seuil de couple,
dans laquelle la seconde valeur de seuil d'angle de tangage est inférieure à la première valeur de seuil d'angle de tangage, et la seconde valeur de seuil de couple est inférieure à la première valeur de seuil de couple.

5. Unité de commande (10) d'un générateur d'éolienne (1) selon la revendication 4,
dans laquelle la partie de commutation du mode de contrôle (11) est configurée pour
commuter le mode de contrôle du premier mode de contrôle au second mode de contrôle lorsque la valeur de commande d'angle de tangage est fixée à la valeur maximale et la valeur de commande de couple est supérieure à la première valeur de seuil de couple dans le premier mode de contrôle, et
commuter le mode de contrôle du second mode de contrôle au premier mode de contrôle lorsque la valeur de commande de couple est fixée à la valeur maximale et la valeur de commande d'angle de tangage est supérieure à la première valeur de seuil d'angle de tangage dans le second mode de contrôle.

6. Unité de commande (10) d'un générateur d'éolienne (1) selon la revendication 4 ou 5,
dans laquelle la partie de commutation du mode de contrôle (11) est configurée pour
commuter le mode de contrôle du premier mode de contrôle au second mode de contrôle, indépendamment d'une ampleur de la valeur de commande de couple, lorsque la vitesse de rotation du rotor (5) est devenue au moins égale à une valeur limite supérieure, qui est supérieure à une vitesse de rotation nominale, et
commuter le mode de contrôle du second mode de contrôle au premier mode de contrôle, indépendamment d'une ampleur de la valeur de commande d'angle de tangage, lorsque la vitesse de rotation du rotor (5) est devenue non supérieure à une valeur limite inférieure, qui est inférieure à la vitesse de rotation nominale.

7. Générateur d'éolienne (1) comprenant : un rotor (5) comprenant au moins une pale (2) ; et une unité de commande (10) selon l'une quelconque des revendications 4 à 6.
